# EUROPÄISCHE PATENTSCHRIFT

(11) **EP 0 796 389 B1**
(45) Veröffentlichungstag und Bekanntmachung des Hinweises auf die Patenterteilung: **14.10.1998**
(21) Anmeldenummer: 95936413.4
(22) Anmeldetag: 21.11.1995
(51) Int. Cl.: F01N 7/00, F01N 3/28, F01N 7/12, F01N 3/04

(54) **WASSERGEKÜHLTE KATALYSATORANLAGE**
WATER-COOLED CATALYST SYSTEM
INSTALLATION CATALYTIQUE REFROIDIE PAR EAU

(30) Priorität: 23.11.1994 CH 3529/94
(43) Veröffentlichungstag der Anmeldung: 24.09.1997
(73) Patentinhaber: TEZET-Service AG, 8184 Bachenbülach (CH)
(72) Erfinder: LEISTRITZ, Klaus, CH-8437 Zurzach (CH)
(74) Vertreter: Patentanwälte Breiter + Wiedmer AG
(86) Internationale Anmeldenummer: CH9500275
(87) Internationale Veröffentlichungsnummer: WO9616256

(56) Entgegenhaltungen:
- EP-A- 0 314 129
- US-A- 5 212 949
- US-A- 5 239 825
- PATENT ABSTRACTS OF JAPAN vol. 8 no. 132 (M-303) [1569] ,20.Juni 1984 & JP,A,59 034413 (KOGATA GAS REIBOU) 24.Februar 1984,
- PATENT ABSTRACTS OF JAPAN vol. 8 no. 240 (M-336) [1677] ,6.November 1984 & JP,A,59 120710 (TOSHIBA) 12.Juli 1984,

## Beschreibung

Die Erfindung bezieht sich auf eine wassergekühlte Katalysatoranlage zur Verminderung der Schadstoffemissionen in Form von Kohlenwasserstoffen, Kohlenmonoxiden und Stickoxiden von Brennstoffkraftmotoren, insbesondere von Schiffsmotoren oder stationären Motoren, wobei das gesamte Abgas durch einen am Motor (10) gehalterten, in einem äusseren Wasserkühler angeordneten Katalysator mit einem stirnseitig beidseits offenen Katalysatorgehäuse fliesst.

Ein selbstzündender oder ein Brennstoffkraftmotor mit einem Fremdzünder erzeugt im wesentlichen Kohlendioxid, aber auch Kohlenmonoxid, Stickoxide und Kohlenwasserstoffe, welche in den Abgasen ausgestossen werden. Während die Kohlen- und Stickoxide chemisch definierte Verbindungen sind, umfassen die Kohlenwasserstoffe eine grosse Anzahl von Verbindungen.

Heute werden zunehmend strenge Abgasnormen erstellt, welche nur noch sehr geringe Restmengen an den erwähnten schädlichen Gasen zulassen. Dies betrifft nicht nur Automobilmotoren, sondern zunehmend auch Schiffsmotoren und stationäre Motoren. Insbesondere die in Seen und auf Flüssen in grosser Zahl verkehrenden Motorboote werden in absehbarer Zeit strengeren Regelungen unterworfen, welche die Abgas-Emissionen der bereits in Verkehr gesetzten Motoren kaum mehr zulassen werden.

Bei der Abgasreinigungstechnologie von mit Benzin betriebenen Otto-Motoren spielen über eine Lambda-Sonde gesteuerte Katalysatoren eine zentrale Rolle, insbesondere Dreiwege-Katalysatoren, länderspezifisch jedoch auch Oxidations-und/oder Doppelbett-Katalysatoren. Diese Katalysatoren erreichen nach kurzer Zeit eine hohe Temperatur im Bereich von 900 bis 1000°C, entwickeln also eine grosse Wärmeabstrahlung und müssen ausserhalb des Berührungsbereichs durch den Menschen liegen. Bei Automobilen ist dies kein Problem, die Katalysatoren sind unterhalb des Fahrzeugbodens in verhältnismässig grosser Distanz zum Motor sicher angeordnet und einem kühlenden Luftzug ausgesetzt. Ein Bootsmotor dagegen lässt eine katalytische Abgasentgiftung nur zu, wenn ein Katalysator in unmittelbarer Nähe des Motors abgeordnet ist, wobei der kühlende Fahrtwind weitgehend entfällt. Im Hinblick auf die vom Katalysator entwickelte Hitze und der damit einhergehenden Brandgefahr sind trotz des breiten Marktangebots praktisch keine Bootsmotoren mit katalytisch gereinigten Abgasen zu finden. Dies ist um so nachteiliger, als es für ein Boot naturgemäss schwieriger ist, rasch und vollständig aus der eigenen Abgaswolke herauszukommen. Bei ungünstigen Windverhältnissen kann eine solche Abgaswolke das Boot über längere Zeit begleiten.

In der US,A 5239825 wird ein Schiffsmotor mit verbesserter Abgasqualität beschrieben. Im Bereich des Motorblocks ist eine Katalysatoreinheit mit einem unmittelbar neben den Abgasaustrittsöffnungen im Abgasstrom angeordneten Katalysator offenbart. Dieser ist direkt am Motorblock befestigt. Das Abgas wird beim Querdurchtritt durch den Katalysator gereinigt und tritt durch einen mittels einer ersten Abdeckhaube begrenzten Abgaskanal aus. Die erste Abdeckhaube bildet mit einer zweiten Abdeckhaube eine Wasserkammer.

In der EP, B1 0314129 wird eine Katalysatoranlage für Otto-Motoren beschrieben, mit deren Hilfe Abgase von Bootsmotoren auch bei einem fetten Einspritzgemisch, also mit hohen CO-und HC-Emissionen, aufgearbeitet werden können. Es werden insbesondere Bootsmotoren, die mit sehr hohen Lambda-Werten zwischen etwa 0,75 und 0,90 betrieben werden, angestrebt. Zur Lösung führt eine Katalysatoranlage mit einem stromauf im Abgasstrom liegenden reduktiven Teil und einem stromab liegenden oxidativen Katalysatorteil, bei rein axialer Führung des Abgases durch die Katalysatorteile. Der Katalysator ist von einem wassergekühlten Gehäuse umgeben, kann also keine grosse Hitzeabstrahlung entwickeln. Zwischen dem Katalysatormantel und dem wassergekühlten Gehäuse ist nach einem erfindungswesentlichen Merkmal ein Luftspalt belassen. Am stromab liegenden Ende des Katalysators wird Sekundärluft aus der Umgebung zugeführt, durch den erwähnten Luftspalt in einen Zwischenraum zwischen reduktivem und oxidativem Katalysatorteil geführt und von dort mit den Abgasen ausgestossen. Die mit einer speziellen Pumpe eingebrachte Sekundärluft dient neben der Nachbrennung des fetten, eingespritzen Treibstoffgemischs auch der Isolation des sehr heissen Katalysators gegenüber den kalten, wassergekühlten Gehäuseteilen. Die Brandgefahr bei einem allfälligen Austreten von Abgas in den Bootsraum bei einem allfälligen Defekt des Gebläses für Sekundärluft oder einer Sekundärluftleitung soll durch Rückschlagventile gebannt werden.

In der US,A 5212949 wird eine wassergekühlte Abgasreinigungsanlage für Bootsmotoren beschrieben. Das rohe Abgas wird in einem Sammelrohr zusammengeführt und durch einen Katalysator geleitet. Dieser ist von einem direkt anliegenden Wasserkühler umgeben, was eine schockartige Kühlung bewirkt.

Der Erfinder hat sich die Aufgabe gestellt, eine wassergekühlte Katalysatoranlage der eingangs genannten Art zu schaffen, welche universell für alle Motoren- und Katalysatorentypen anwendbar ist, keine massive Schockwirkung erzeugt und keine zusätzlichen Leitungssysteme mit Rückschlagventilen erforderlich macht.

Die Aufgabe wird erfindungsgemäss dadurch gelöst, dass das ganze Katalysatorgehäuse von einer becherförmigen Gasisolationshaube umgeben ist, welche einen Spalt zwischen dem Katalysatorgehäuse und dem Wasserkühler bildet, und die stromauf in Richtung des Katalysators offen, stromab geschlossen ist und einen im wesentlichen tangentialen Rohreinführungsstutzen für das zu reinigende Abgas aufweist. Spezielle und weiterbildende Ausführungsformen der Erfindung sind Gegenstand von abhängigen Patentansprüchen.

Von erfindungswesentlicher Bedeutung ist die in Strömungsrichtung des Abgases blind endende Gasisolationshaube. Diese umhüllt den Katalysator mit Ausnahme der Austrittsöffnung für die entgifteten Abgase vollständig. Die Innenwandung der Gasisolationshaube kann bei entsprechender Abdichtung durch das Katalysatorgehäuse gebildet sein.

Die Gasisolationshaube, einfachheitshalber auch als Gasmantel bezeichnet, ist so ausgestaltet, dass die Abgase stromauf genügend Freiraum zum ungehinderten Einströmen in den Katalysator haben. Der Gasmantel erstreckt sich also nicht nur über den peripheren Bereich, sondern auch über den Bereich der Eintrittsöffnungen des Katalysators. Die Gasisolationshaube ist im wesentlichen becherförmig ausgebildet.

Ist die Gasisolationshaube im peripheren Bereich als Doppelmantel ausgebildet, so fehlt im Bodenbereich des Bechers die Innenwandung, oder sie ist so perforiert, dass das zu reinigende Abgas austreten und ungehindert in den Katalysator strömen kann.

Die Eintritts- und die Austrittsöffnung des Katalysators können einander im Bereich der Längsachse gegenüberliegen. Bei engen Platzverhältnissen, beispielsweise einem Bootsmotor, kann das zu reinigende Abgas über einen im wesentlichen tangentialen seitlichen Rohreinführungsstutzen in den peripheren Mantel der Gasisolationshaube geführt sein.

Die Gasisolationshaube ist zweckmässig in an sich bekannter Weise als Reflexions-Schalldämpfer an sich bekannter Bauart ausgebildet. Die Aussenwandung der Gasisolationshaube entspricht dem äusseren Hüllrohr eines Reflexions-Schalldämpfers, die Innenwandung oder das Katalysatorgehäuse einem Gasführungsrohr in einem Auspuffsystem. In der DE,C1 3810755 beispielsweise wird ein Reflexions-Schalldämpfer beschrieben, welcher im Grundsatz auch für eine erfindungsgemässe Gasisolationshaube eingesetzt werden kann. Die Anordnung der Gasführungsrohre und der Zwischenböden wird fallweise überprüft.

Im Gegensatz zur EP,A1 0314129 wird der Gasisolationshaube niemals Sekundärluft zugeführt. Die Abgase trennen das Katalysatorgehäuse und den Wasserkühler, die Schockwirkung wird abgedämpft. Für die konstruktive Gestaltung von Gasisolationshaube und Wasserkühler bietet sich dem Fachmann eine reiche Palette von Varianten dar, welche in Funktion der Parameter festgelegt werden.

Die Gasisolationshaube und der Wasserkühler bestehen zweckmässig aus einem leicht bearbeitbaren oder leicht formbaren, korrosionsfesten Werkstoff, welcher zumindest für den Wasserkühler eine hohe Wärme-Leitfähigkeit aufweist. In erster Linie bieten sich Metalle an, insbesondere Kupferwerkstoffe, welche in zahlreichen Qualitäten angeboten werden.

Zur allseitigen Kühlung der Gasisolationshaube und damit über eine Isolationsschicht des Katalysators verläuft ein Wasserkühler zweckmässig rundum, in bestimmten Anwendungsfällen kann jedoch auch nur ein bestimmter Teil gekühlt sein. Bei flach ausgebildeten Katalysatoren kann beispielsweise in bezug auf das Fahrzeug die Aussenseite gekühlt sein, während der dem Motor zugewandte Teil des Katalysatorgehäuses keinen Wasserkühler aufweist.

Nach einer ersten Variante ist der Wasserkühler als Wassermantel ausgebildet, welcher vollflächig auf der Gasisolationshaube aufliegt und mit ihr verbunden ist, z.B. direkt verschweisst, verlötet, verschraubt, vernietet, angeklemmt oder verklebt, wobei im letzteren Fall die Kleberschicht die Funktion der wärmedeämmenden Schicht übernehmen kann.

Nach einer zweiten Variante ist der Wasserkühler in Form von Wasserrohren ausgebildet, welche im Prinzip wie ein Wassermantel mit der Gasisolationshaube verbunden sind. Die Rohre können in allen im Handel befindlichen Formen der betreffenden Qualität ausgebildet sein, beispielsweise im Querschnitt rund, elliptisch, quadratisch oder rechteckig.

Zur besseren Wärmeübertragung vom Kühlmedium auf den Wasserkühler kann dieser längslaufende Lamellen haben, welche in den Strömungskanal hineinragen, aber dem Medium einen möglichst geringen Widerstand entgegensetzen. Zweckmässig sind die Lamellen aus dem gleichen Material wie die Wandung des Wasserkühlers hergestellt und auf diese geschweisst, gelötet oder mit ihr coextrudiert.

Das Katalysatorgehäuse in der Gasisolationshaube und dem aussenliegenden, vorzugsweise durch Betätigung eines Magnetventils entleerbaren Wasserkühler kann in dem Fachmann geläufiger Weise leicht montiert werden, beispielsweise durch Schrauben, Anschweissen, Annieten usw.

Die erfindungsgemässe Katalysatoranlage kann besonders vorteilhaft betrieben werden, indem ein Brennstoffkraftmotor, welcher das zu reinigende Abgas erzeugt, mit entleertem Wasserkühler gestartet, die Abgastemperatur kontinuierlich gemessen, beim Erreichen einer ersten einstellbaren Abgastemperatur das Kühlwasser zudosiert, eine zweite einstellbare Abgastemperatur aufrechterhalten, und nach dem Abstellen des Motors das Kühlwasser der Katalysatoranlage entleert wird, wobei die Abgastemperaturen am Katalysatorausgang gemessen werden.

Die Steuerung der wassergekühlten Katalysatoranlage erfolgt mittels wenigstens eines am Katalysatorausgang in den Abgasstrom hineinragenden Messfühlers, welcher mit einem Mikroprozessor verbunden ist. Der Mikroprozessor schaltet die Dosierung des Kühlwasserstroms über Stellorgane, wie Magnetventile, in an sich bekannter Weise voll automatisch.

Der beim Start des Motors leere Wasserkühler ermöglicht, dass der Katalysator nach 30 bis 60 sec eine etwa der ersten Abgastemperatur T₁ entsprechende Innentemperatur von wenigstens 280°C erreicht hat und damit funktionsfähig wird. Die Kühlwasserzufuhr wird spätestens beim Erreichen von 400°C, vorzugsweise im Bereich von 300 bis 350°C eingestellt. Bei weiter steigender Abgastemperatur wird programmgesteuert Kühlwasser so zudosiert, dass die Abgastemperatur T₂ um einen zweiten einstellbaren Wert im Bereich von 450 bis 750°C, vorzugsweise 480 bis 700°C, pendelt.

Die erste einstellbare Abgastemperatur T₁ ist in erster Linie motorabhängig, die zweite einstellbare Abgastemperatur T₂ motor- und leistungsabhängig.

Bei voller Last eines Zweitakt-Bootsmotors ist beispielsweise eine optimale zweite Abgas-Temperatur T₂ von etwa 720°C ermittelt worden, bei normaler Last eine solche von 490 bis 520°C. Die Regelprozesse werden typenspezifisch optimiert und aufgezeichnet.

Mit der Erfindung werden bisher einer wirtschaftlichen Nutzung kaum zugängliche, umweltbelastende Verwendungsgebiete für Katalysatoren in technisch verbesserter Weise erschlossen, soweit das Kühlmedium Wasser hinreichend zur Verfügung steht. Dies gilt für Neuausrüstungen und Umrüstungen.

Wassergekühlte Katalysatoren können in Verbindung mit Zwei-oder Viertakt-Benzinmotoren und Dieselmotoren, in stationärer und mobiler Ausführungsform, für Schiffe-, landwirtschaftliche und industrielle Zwecke angewendet werden. Bei den besonders interessierenden Bootsmotoren bilden die Katalysatoren keine Gefahrenquelle mehr, die Oberfläche haben eine Temperatur im Bereich von 30 bis 50°C. Damit ist nicht nur die Brandgefahr behoben, auch bei unfreiwilligen Berührungen besteht keine Verbrennungsgefahr.

Die Erfindung wird anhand von in der Zeichnung dargestellten Ausführungsbeispiel, welche auch Gegenstand von abhängigen Patentansprüchen sind, näher erläutert. Es zeigen schematisch:
- Fig. 1 einen Brennstoffkraftmotor mit einer Katalysatoranlage,
- Fig. 2 einen Aufriss einer Katalysatoranlage, und
- Fig. 3 eine Seitenansicht einer Katalysatoranlage gemäss Fig. 2.

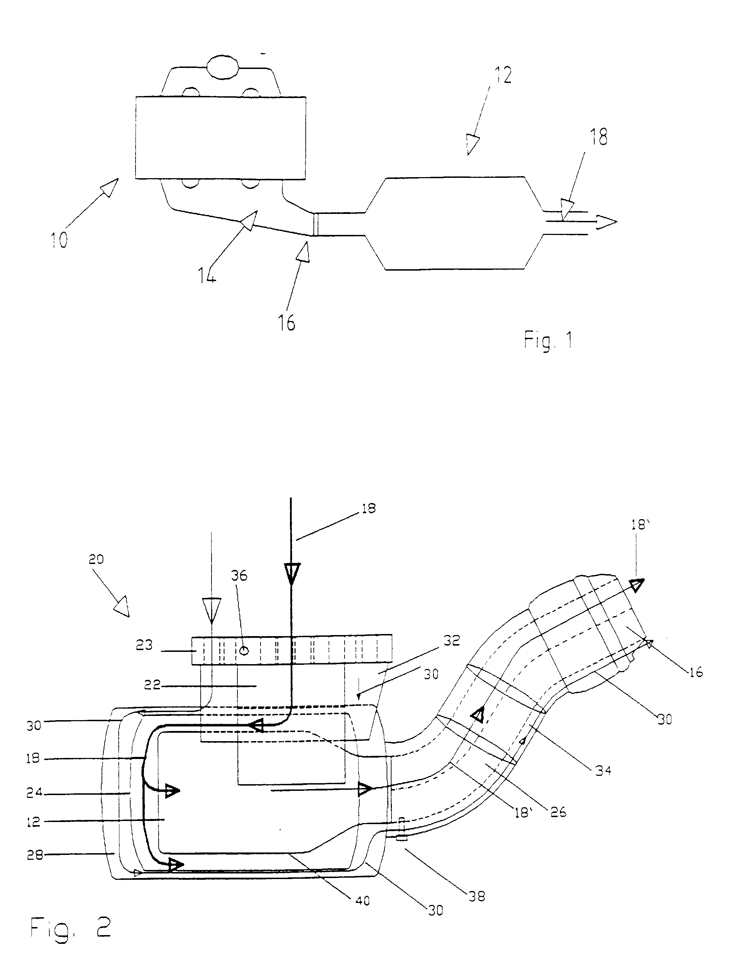

In Fig. 1 ist ein Brennstoffkraftmotor 10 angedeutet, welcher mit einem Katalysator 12 ausgerüstet ist. Der Motor hat in üblicher Weise ein Auspuffrohr mit einer Abgassammelleitung 14, an welche der Katalysator 12 mittels einer Manschette 16 angeflanscht ist. Das mit einem Pfeil charakterisierte Abgas 18 verlässt den Katalysator 12 gereinigt, mit einem geringen Restwert von giftigen Gasen. In einem Bootsmotor beispielsweise sind jedoch Motor 10 und Katalysator 12 unmittelbar nebeneinander angeordnet, nicht längsgestreckt hintereinander, wie dies im Prinzip gemäss Fig.1 angedeutet ist. Als Katalysator 12 kann jeder handelsübliche Katalysator mit Stahlmantel oder ein speziell zur Verwirklichung der vorliegenden Erfindung angepasster Katalysator verwendet werden, zusammen mit den erfindungsgemässen Gasisolierhaube und Wasserkühler ergibt sich in jedem Fall die angestrebte wassergekühlte Katalysatoranlage.

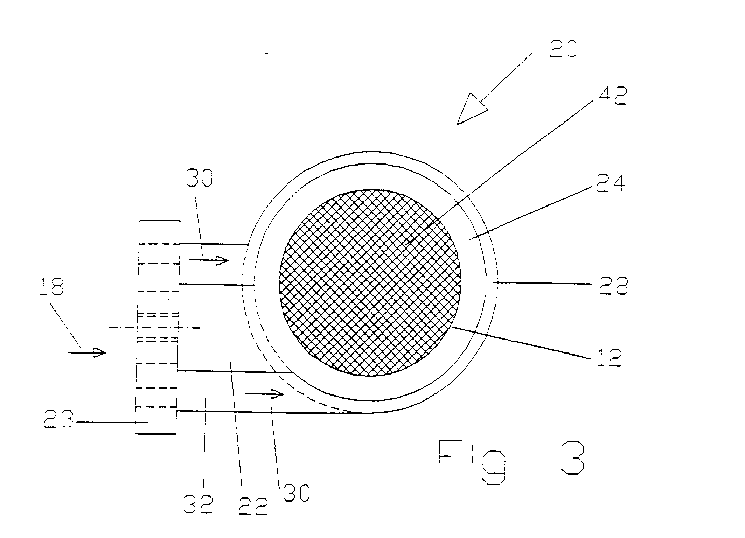

In Fig. 2 und 3 ist eine Katalysatoranlage 20 eines Brennstoffkraftmotors 10 (Fig. 1) dargestellt. Das nicht gereinigte Abgas 18 wird über einen Rohreinführungsstutzen 22 mit einem Flansch 23 zum Katalysator 12 geleitet. Das nicht entgiftete Abgas 18 wird vorerst in etwa tangentialer Richtung in den Mantelraum einer im wesentlichen becherförmigen Gasisolationshaube 24 geleitet. Diese Gasisolationshaube 24 ist in Richtung des Gasableitungsrohrs 26 für das gereinigte Abgas 18' blind ausgebildet. Das ungereinigte Abgas 18 wird durch den Katalysator 12 in das Gasableitungsrohr 26 geleitet. In der Gasisolationshaube 24 bzw. deren Mantel wird das nicht entgiftete Abgas 18 gestaut und bildet zum umgebenden Wasserkühler 28 eine Isolationsschicht, welche gegenüber dem in den Katalysator 12 geleiteten, nicht entgifteten Abgas 18 kommunizierend ist.

Das Kühlwasser 30 wird über den Kühlmantel 32 in den Wasserkühler 28 des Katalysators 12 geführt und von dort über den Kühlmantel 34 des Gasableitungsrohrs abgeführt. Das Kühlwasser 30 kann auch in umgekehrter Richtung, im Gegenstrom, geführt werden.

Zur Abgasentnahme vor dem Katalysator ist im Flansch 23 ein Verschlusszapfen 36 angeordnet. Für die Abgasentnahme nach dem Katalysator ist ein weiterer Verschlusszapfen 38 im Gasableitungsrohr 26 vorgesehen.

Der aktive Teil des Katalysators 12 wird auch Monolit genannt, welcher in ein Katalysatorgehäuse 40 eingesetzt ist. Dieser auch Trägerkörper genannte Monolit besteht üblicherweise aus einem wabenförmigen Grundkörper aus Keramik oder Metall unterschiedlicher Querschnittsformen. Das Keramikmaterial ist hochtemperaturfest und besteht im vorliegenden Fall zu 90 % aus Cordierit. Dieser Zellenträger stellt einen optimalen Kompromiss hinsichtlich
- Thermoschock-Festigkeit
- Wärmeausdehnung
- mechanischer Festigkeit
- hoher freier Querschnittsfläche und
- grosser geometrischer Oberfläche
dar.

## Patentansprüche

1. Wassergekühlte Katalysatoranlage (20) zur Verminderung der Schadstoffemissionen in Form von Kohlenwasserstoffen, Kohlenmonoxiden und Stickoxiden von Brennstoffkraftmotoren, insbesondere von Schiffsmotoren oder stationären Motoren, wobei das gesamte Abgas (18) durch einen am Motor (10) gehalterten, in einem äusseren Wasserkühler (28) angeordneten Katalysator (12) mit einem stirnseitig beidseits offenen Katalysatorgehäuse (40) fliesst,
dadurch gekennzeichnet, dass
das ganze Katalysatorgehäuse (40) von einer becherförmigen Gasisolationshaube (24) umgeben ist, welche einen Spalt zwischen dem Katalysatorgehäuse (40) und dem Wasserkühler (28) bildet, und die stromauf in Richtung des Katalysators (12) offen, stromab geschlossen ist und einen im wesentlichen tangentialen Rohreinführungsstutzen (22) für das zu reinigende Abgas aufweist.

2. Katalysatoranlage (20) nach Anspruch 1, dadurch gekennzeichnet, dass die becherförmige Gasisolationshaube (24) einen Doppelmantel und einen in Richtung der Einströmseite des Katalysators (12) offenen oder perforierten Boden umfasst.

3. Katalysatoranlage (20) nach Anspruch 1, dadurch gekennzeichnet, dass sie am Motorblock angeflanscht ist.

4. Katalysatoranlage (20) nach einem der Ansprüche 1 bis 3, dadurch gekennzeichnet, dass der Rohreinführungsstutzen (22) für das zu reinigende Abgas (18) einen Kühlmantel (32) aufweist, welcher mit dem Wasserkühler (28) des Katalysators (12) und einem allenfalls vorhandenen Kühlmantel (34) der Abgasleitung (26) kommuniziert.

5. Katalysatoranlage (20) nach einem der Ansprüche 1 bis 4, dadurch gekennzeichnet, dass die Gasisolationshaube (24) als Reflexionsschalldämpfer ausgebildet ist.

6. Katalysatoranlage (20) nach einem der Ansprüche 1 bis 5, dadurch gekennzeichnet, dass im Bereich des Rohreinführungsstutzens (22) und des Gasableitungsrohrs (26) je ein Verschlusszapfen (36, 38) zur Abgasentnahme angeordnet ist.

## Claims

1. Water-cooled catalyst system (20) for reducing the emission of pollutants in the form of hydrocarbons, carbon monoxides and nitrous oxides from fuelled combustion engines, in particular ship engines or stationary engines, where the entire exhaust gas (18) flows through a catalyst (12) held on an engine (10) and arranged in an external water cooler (28) with a catalyst housing (40) open at both ends,
characterized in that
the entire catalyst housing (40) is surrounded by a gas insulation cover (24) which runs as a cup-shaped gap between the catalyst housing (40) and the water cooler (28), and in that the gas insulation cover (24) which is open upstream in the direction of the catalyst (12) and ends closed downstream has an essentially tangential pipe inlet connector (22) for the exhaust gas to be cleaned.

2. Catalyst system (20) according to claim 1, characterized in that the cup-shaped gas insulation cover (24) has a double shell and a base open or perforated in the direction of the inlet side of the catalyst (12).

3. Catalyst system (20) according to claim 1, characterized in that it is flanged to the engine block.

4. Catalyst system (20) according to any of claims 1 to 3, characterized in that the pipe inlet connector (22) for the exhaust gas (18) to be cleaned has a cooling shell (32) which communicates with the water cooler (28) of the catalyst (12) and a cooling shell (34), also present, of the exhaust gas pipe (26).

5. Catalyst system (20) according to any of claims 1 to 4, characterized in that the gas insulation cover (24) is designed as a reflection sound damper.

6. Catalyst system (20) according to any of claims 1 to 5, characterized in that a sealing tap (36, 38) for exhaust gas extraction is arranged in the area of both the pipe inlet connector (22) and the exhaust gas pipe (26).

## Revendications

1. Installation catalytique (20) refroidie à l'eau destinée à réduire les émissions d'éléments polluants sous forme de carbures d'hydrogène, de monoxyde de carbone et d'oxydes d'azote à partir de moteurs à combustion, en particulier de moteurs de navires ou de moteurs stationnaires, tous les gaz d'échappement (18) traversant un catalyseur (12), supporté sur le moteur (10) et agencé dans un réfrigérant extérieur (28) à l'eau, et pourvu d'un carter (40) de catalyseur ouvert frontalement sur les deux côtés,
caractérisée en ce que
tout le carter (40) de catalyseur est entouré par un capot (24) d'isolation de gaz en forme de godet qui ménage un intervalle entre le carter (40) de catalyseur et le refroidisseur à l'eau (28) et qui est ouvert en amont en direction du catalyseur (12) et fermé en aval et qui comporte un piquage tubulaire d'entrée (22) sensiblement tangentiel pour le gaz d'échappement à épurer.

2. Installation catalytique (20) selon la revendication 1, caractérisée en ce que le capot (24) d'isolation de gaz en forme de godet inclut une double enveloppe et un fond ouvert ou perforé en direction du côté amont du catalyseur (12).

3. Installation catalytique (20) selon la revendication 1, caractérisée en ce qu'elle est bridée sur le bloc moteur.

4. Installation catalytique (20) selon l'une des revendications 1 à 3, caractérisée en ce que le piquage tubulaire d'introduction (22) du gaz d'échappement (18) à épurer comporte une enveloppe réfrigérante (32) qui communique avec le réfrigérant à l'eau (28) du catalyseur (12) et avec une enveloppe réfrigérante (34), éventuellement présente, de la conduite (26) de gaz d'échappement.

5. Installation catalytique (20) selon l'une des revendications 1 à 4, caractérisée en ce que le capot d'isolation (24) de gaz est réalisé sous forme de silencieux à réflexion.

6. Installation catalytique (20) selon l'une des revendications 1 à 5, caractérisée en ce que deux bondes d'arrêt (36, 38) sont agencées, pour prélever des gaz d'échappement, respectivement dans la zone du piquage tubulaire (22) d'introduction et dans celle du tube d'échappement (26) des gaz.
